# NEUE EUROPÄISCHE PATENTSCHRIFT

(11) **EP 2 242 711 B2**
(45) Veröffentlichungstag und Bekanntmachung des Hinweises auf die Entscheidung über den Einspruch: **08.12.2021**
(45) Hinweis auf die Patenterteilung: 24.08.2011
(21) Anmeldenummer: 09713204.7
(22) Anmeldetag: 27.01.2009
(51) Int. Cl.: B65G 49/04

(54) **HÄNGEBAHNSYSTEM, TAUCHBEHANDLUNGSANLAGE MIT EINEM SOLCHEN, UND VERWENDUNG DIESES HÄNGEBAHNSYSTEMS**
OVERHEAD CONVEYOR SYSTEM, DIP COATING LINE COMPRISING SAID SYSTEM, AND USE OF SAID CONVEYOR
CONVOYEUR AÉRIEN, INSTALLATION DE TRAITEMENT PAR IMMERSION AVEC CE CONVOYEUR, ET UTILISATION DU CONVOYEUR

(30) Priorität: 21.02.2008 DE 102008010400
(43) Veröffentlichungstag der Anmeldung: 27.10.2010
(73) Patentinhaber: Eisenmann GmbH, 71032 Böblingen (DE)
(72) Erfinder: ROBBIN, Jörg, 72119 Pfäffingen (DE)
(74) Vertreter: Ostertag & Partner Patentanwälte mbB
(86) Internationale Anmeldenummer: PCT/EP2009/000497
(87) Internationale Veröffentlichungsnummer: WO 2009/103401

(56) Entgegenhaltungen:
- EP-A1- 0 015 848
- EP-A1- 0 110 525
- EP-A2- 1 319 444
- WO-A-2008/025498
- WO-A1-03/059793
- WO-A1-03/070545
- WO-A1-2004/096448
- WO-A1-2009/083081
- DE-A1- 2 902 352
- DE-A1- 3 612 485
- DE-A1- 4 326 563
- DE-A1- 10 261 337
- DE-A1- 10 306 826
- DE-A1- 10 309 328
- DE-A1- 19 641 048
- DE-A1-102007 063 061
- DE-B4- 10 125 032
- DE-U1- 8 810 999
- DE-U1- 9 408 846
- FR-A- 2 400 966
- GB-A- 1 343 019
- JP-A- H 108 292
- US-A- 3 952 699
- US-A- 4 772 374
- US-A1- 2004 149 542
- US-A1- 2007 000 758

## Beschreibung

Die Erfindung betrifft eine Tauchbehandlungsanlage zum Behandeln von Fahrzeugkarosserien gemäß dem Oberbegriff des Anspruchs 1.

Bei vom Markt her bekannten Systemen, wie sie in Tauchbehandlungsanlagen für Fahrzeugkarosserien eingesetzt werden und beispielsweise aus der DE 196 41 048 C2 bekannt sind, ist die Befestigungseinrichtung um eine Drehachse verdrehbar, welche horizontal und senkrecht zur Bewegungsrichtung verläuft. Um die zu behandelnde Fahrzeugkarosserie in ein mit flüssigem Lack gefülltes Tauchbecken einzubringen, wird die zu behandelnde Fahrzeugkarosserie unter Überlagerung einer reinen Translationsbewegung und einer reinen Drehbewegung um die horizontale Drehachse bewegt. Die Grundausrichtung der Fahrzeugkarosserie zur Bewegungsrichtung der Translation verändert sich dabei abgesehen von ihrer Drehung um die horizontale Achse nicht; in der Regel schließen die Längsachse der Fahrzeugkarosserie und die Bewegungsrichtung in einer Projektion in eine horizontale Ebene stets den gleichen Winkel ein.

DE 101 03 837 B4 offenbart ein Hängebahnsystem gemäß dem Oberbegriff des Anspruchs 1 und eine Tauchbehandlungsanlage gemäß dem Oberbegriff des Anspruchs 8.

Bei diesem System, welches zum Transport von Fahr-zeugkarosserien in einer Tauchbehandlungsanlage eingesetzt wird, kann die Fahrzeugkarosserie zusätzlich in einer Vertikalbewegung abgesenkt oder angehoben werden. In diesem Fall kann für die Fahrzeugkarosserie ein Bewegungsablauf erzielt werden, der eine Überlagerung einer horizontalen Linearbewegung, einer vertikalen Linearbewegung und einer Drehung um die horizontale Drehachse ist. Dabei kann die Fahrzeugkarosserie auch noch um die horizontale Drehachse verdreht werden, nachdem sie durch die Vertikalbewegung in das Tauchbecken abgesenkt wurde. Auch hier bleibt die Grundausrichtung der Fahrzeugkarosserie gegenüber der Bewegungsrichtung der Translation unverändert.

Die Transportwägen derartiger Systeme müssen zum Eingang der Tauchbehandlungsanlagen zurückgeführt werden, nachdem die Fahrzeugkarosserie durch das Tauchbad hindurchgeführt worden ist und von dem Transportwagen abgenommen wurde. Der Transportwagen nimmt auf dem Rückweg vom Ausgang der Tauchbehandlungsanlage bis zu deren Eingang, auf dem er nicht mit einer Fahrzeugkarosserie beladen ist, denselben Raum in Anspruch, den er beim Durchfahren der Tauchbehandlungsanlage mit der Fahrzeugkarosserie benötigt. Der Bauraum für die Rückführung der Transportwägen muss entsprechend großzügig bemessen sein.

Darüber hinaus ist die Bewegungskinematik im Hinblick auf die Dreh- bzw. Schwenkbewegung der Fahrzeugkarosserie bei vom Markt her bekannten Gegenständen auf die Drehung bzw. Verschwenkung um die horizontale Achse beschränkt. Um ein besseres Behandlungsergebnis, insbesondere Lackierergebnis, zu erzielen, besteht der Wunsch nach einer Erhöhung der Bewegungsfreiheitsgrade der Fahrzeugkarosserien im Tauchbad.

Aufgabe der vorliegenden Erfindung ist es, eine Tauchbehandlungsanlage der eingangs genannten Art so auszugestalten, dass einerseits die Bewegungsfreiheitsgrade der zu behandelnden Fahrzeugkarosserie und damit die Variabilität der Bewegungskinematik erhöht wird und andererseits der Raumbedarf des Transportwagens ohne daran befestigte Fahrzeugkarosserie verringert sein kann.

Diese Aufgabe wird erfindungsgemäß durch eine Tauchbehandlungsanlage gemäß Anspruch 1 gelöst.

Erfindungsgemäß ist eine vertikale Drehbewegung für den zu behandelnden Gegenstand möglich, was dem gesamten Bewegungsablauf für den Gegenstand beispielsweise beim Durchfahren eines Tauchbeckens neue Möglichkeiten eröffnet. Zugleich bietet die vertikale Drehachse die Möglichkeit, die Befestigungseinrichtung in eine den örtlichen Gegebenheiten ggfs. besser angepasste Position zu bringen, wenn kein Gegenstand daran befestigt ist.

Es ist insbesondere günstig, wenn für die mindestens eine Fahrzeugkarosserie ein Bewegungsablauf erzielbar ist, der eine Überlagerung einer horizontalen Linearbewegung und einer Drehung um die vertikale Drehachse ist.

Dieses Konzept bedeutet nicht, dass bei einer horizontalen Linearbewegung der Fahrzeugkarosserie auch stets eine Drehung um die vertikale Drehachse erfolgt. Genauso wenig muss die Fahrzeugkarosserie bei einer Drehung um die vertikale Drehachse zwingend in horizontaler Richtung bewegt werden. Es genügt, wenn das Hängebahnsystem die Möglichkeit bietet, die Bewegungsfreiheitsgrade gleichzeitig zu nutzen. Auch ist nicht ausgeschlossen, dass die Befestigungseinrichtung noch in weiteren Bewegungsfreiheitsgraden bewegt werden kann. Dies kann insbesondere im Hinblick auf die Raumersparnis beim Führen des unbeladenen Transportwagens nützlich sein.

Vorteilhaft umfasst der Transportwagen einen vertikal verfahrbaren Schlitten, von welchem die Befestigungseinrichtung mitgeführt wird. Auf diese Weise wird der Befestigungsreinrichtung bzw. der daran befestigten Fahrzeugkarosserie ein weiterer Bewegungsfreiheitsgrad hinzugefügt.

Dies kann in günstige Weise realisiert werden, wenn der Transportwagen eine in vertikaler Richtung ein- oder ausfahrbare Teleskopeinrichtung umfasst, welche den Schlitten führt.

Es ist günstig, wenn der Transportwagen als Antriebsmittel einen an der Schiene motorisch verfahrbaren Antriebswagen umfasst. Durch diese Ausgestaltung ist es möglich, Antriebswägen und Antriebsschienen zu verwenden, wie sie aus anderen Anwendungsgebieten bereits bekannt sind. Es lassen sich dadurch alle dort bereits eingesetzten Technologien und Steuerungsverfahren nutzen, die bereits erprobt und bewährt sind.

In diesem Fall kann die Teleskopeinrichtung um die vertikale Drehachse verdrehbar an dem Antriebswagen des Transportwagens gelagert sein.

Eine besonders große Variabilität des Bewegungsablaufs für den Gegenstand wird erzielt, wenn die Befestigungseinrichtung außerdem um eine horizontale Drehachse verdrehbar gelagert ist. Somit kann in Verbindung mit dem vertikal verfahrbaren Schlitten für den Gegenstand ein Bewegungsablauf erzielt werden, der eine Überlagerung einer horizontalen Linearbewegung, einer vertikalen Linearbewegung, einer Drehung um die vertikale Drehachse ist. Wenn auch die horizontale Drehachse realisiert ist, kann in Verbindung mit dem vertikal verfahrbaren Schlitten für den Gegenstand ein Bewegungsablauf erzielt werden, der eine Überlagerung einer horizontalen Linearbewegung, einer vertikalen Linearbewegung, einer Drehung um die vertikale Drehachse ist und einer Drehung um die horizontale Drehachse ist. Auch hier bedeutet dies nicht, dass der Bewegungsablauf stets eine derartige Überlagerung ist; es reicht aus, wenn die Bewegungsfreiheitsgrade gleichzeitig genutzt werden können. Die horizontale Drehachse verläuft vorzugsweise etwa senkrecht zur Bewegungsrichtung des Transportwagens.

Ausführungsbeispiele der Erfindung werden nachstehend anhand der beigefügten Zeichnungen näher erläutert. In diesen zeigen:
- Figur 1: in einer Seitenansicht eine kataphoretische Tauch- lackieranlage für Fahrzeugkarosserien;
- Figuren 2 und 3: perspektivisch aus unterschiedlichen Blick- richtungen einen Transportwagen mit einem Teleskop- arm, wie er zur Förderung der zu lackierenden Fahr- zeugkarosserien bei der Tauchlackieranlage von Fi- gur 1 eingesetzt wird, während des Rückführvorgan- ges vom Ausgang der Anlage zu deren Eingang;
- Figur 4: perspektivisch und in größerem Maßstab eine Detail- ansicht eines Antriebswagens des Transportwagens, wie er bei der kataphoretischen Tauchlackieranlage von Figur 1 eingesetzt wird, wobei ein Mechanismus zum Drehen des Teleskoparms gezeigt ist;
- Figuren 5 und 6: perspektivisch und in größerem Maßstab eine Detailansicht aus unterschiedlichen Blickrichtungen einer Seitenführung des Teleskoparms;
- Figur 7: perspektivisch eine Detailansicht in größerem Maß- stab einer Befestigungseinrichtung des Transportwa- gens, wie er bei der Tauchlackieranlage von Figur 1 eingesetzt wird;
- Figuren 8A bis 8E: verschiedene Ansichten eines ersten Aus- führungsbeispiels des Teleskoparms, wie er beim Transportwagen der kataphoretischen Tauchlackieran- lage von Figur 1 eingesetzt wird, Figuren 9A bis 9E verschiedene Ansichten eines zweiten Ausführungs- beispiels des Teleskoparms, wie er bei dem Trans- portwagen der kataphoretischen Tauchlackieranlage von Figur 1 eingesetzt wird;
- Figuren 10 bis 18: perspektivisch verschiedene Phasen beim Eintauchen einer Fahrzeugkarosserie in das Tauch- becken der kataphoretischen Tauchlackieranlage von Figur 1.

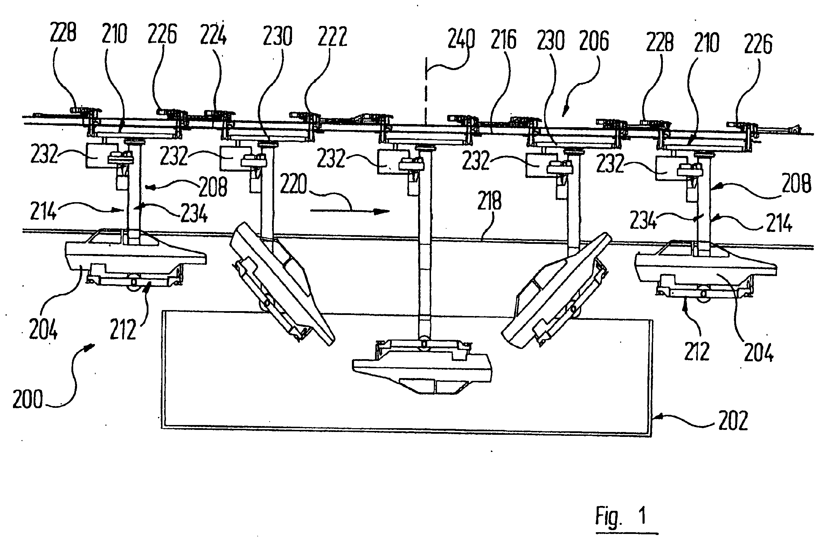

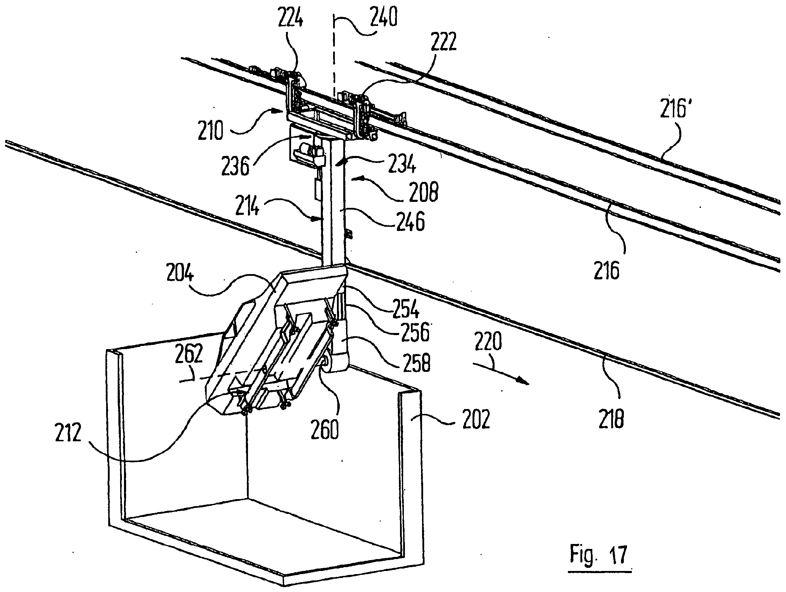

In den Figuren 1 bis 18 ist eine kataphoretische Tauchlackieranlage 200 dargestellt. Diese umfasst ein mit flüssigem Lack gefülltes Tauchbecken 202. Farbpartikel wandern in einem elektrischen Feld, das sich zwischen Fahrzeugkarosserien 204 und Anoden ausbildet, die entlang des Bewegungsweges der Fahrzeugkarosserien 204 angeordnet und aus Übersichtlichkeitsgründen nicht dargestellt sind, auf die Fahrzeugkarosserien 204 zu und werden an diesen abgeschieden.

Die Fahrzeugkarosserien 204 werden mit Hilfe eines Fördersystems 206 durch die Anlage und insbesondere durch das Tauchbecken 202 und den darin befindlichen Lack geführt. Das Fördersystem 206 umfasst eine Vielzahl von Transportwagen 208, die ihrerseits einen Antriebswagen 210 und einen Tragwagen 212 aufweisen, welche über eine weiter unten noch im Detail erläuterte Teleskopeinrichtung 214 miteinander gekoppelt sind.

Über dem Tauchbecken 202 erstreckt sich eine Antriebsschiene 216 mit einem I-Profil, wie sie bei herkömmlichen Elektrohängebahnen eingesetzt wird. Unterhalb der Antriebsschiene 216 und oberhalb des Tauchbeckens 202 verläuft parallel zur Antriebsschiene 216 eine Führungsschiene 218 mit einem nach oben offenen U-Profil.

Die Bewegungsrichtung, in welcher die Fahrzeugkarosserien 204 mittels des Fördersystems 206 gefördert werden, ist in Figur 1 durch einen Pfeil 220 dargestellt. Die Antriebsschiene 216 und die Führungsschiene 218 sind bezogen auf die Mitte des Tauchbeckens 202 in Richtung senkrecht zur Bewegungsrichtung 220 nach außen versetzt, wobei die Führungsschiene 218 weiter außen verläuft als die Antriebschiene 216.

Bei den Antriebswagen 210 handelt es sich im Grundsatz um eine Konstruktion, die von herkömmlichen Elektrohängebahnen her bekannt ist. Jeder dieser Antriebswagen 210 besitzt ein in Bewegungsrichtung 220 vorauseilendes Fahrwerk 222, in der Fachsprache "Vorläufer" genannt, sowie ein in Bewegungsrichtung 220 nacheilendes weiteres Fahrwerk 224, welches in der Fachsprache "Nachläufer" genannt wird. Vorläufer 222 und Nachläufer 224 sind in bekannter Weise mit Führungs- und Tragrollen ausgestattet, die hier nicht eigens mit einem Bezugszeichen versehen sind und an verschiedenen Flächen des I-förmigen Profils der Antriebsschiene 216 abrollen. Mindestens eine der Rollen des Vorläufers 222 bzw. des Nachläufers 224 dient als Antriebsrolle und ist hierzu durch einen Elektromotor 226 bzw. 228 drehbar. Gegebenenfalls kann es ausreichen, wenn lediglich der Vorläufer 222 angetrieben ist. Der über den Antriebswagen 210 angetriebene Transportwagen 208 kann gegebenenfalls auch Steigungen überwinden, wenn die Antriebsschiene 216 in bestimmten Bereichen geneigt verlaufen muss, um den Förderweg an örtliche Gegebenheiten anzupassen.

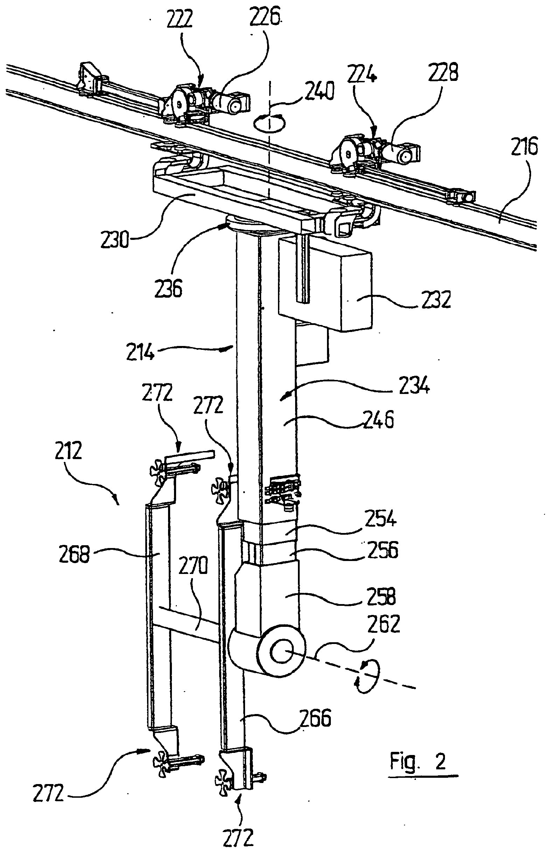

Vorläufer 222 und Nachläufer 224 jedes Antriebswagens 210 sind durch einen Verbindungsrahmen 230 miteinander verbunden, der insbesondere in den Figuren 2 bis 4 gut zu erkennen ist.

Der Verbindungsrahmen 230 trägt wiederum in bekannter Weise eine Steuereinrichtung 232, welche mit der zentralen Steuerung der Tauchlackieranlage 200 und ggfs. mit den Steuereinrichtungen 232 der anderen in der Tauchlackieranlage 200 vorhandenen Antriebswagen 210 kommunizieren kann. Auf diese Weise ist eine weitgehend unabhängige Bewegung der verschiedenen Transportwagen 208 möglich.

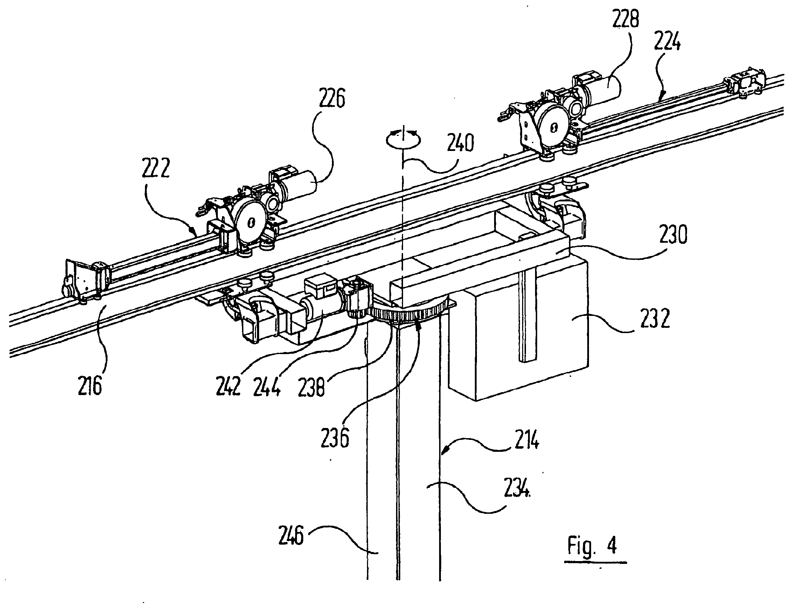

Die Teleskopeinrichtung 214, welche den Antriebswagen 210 mit dem Tragwagen 212 koppelt, umfasst einen dreigliedrigen vertikal verlaufenden Teleskoparm 234, welcher in seiner Länge veränderbar ist. Dieser ist an seinem oberen Ende stirnseitig drehfest mit einem Zahnrad 236 mit einer Außenverzahnung 238 verbunden, so dass die Längsachse des Teleskoparms 234 und die Drehachse 240 des Zahnrads 236 (vgl. Figur 4) zusammenfallen oder zumindest dicht beieinander liegen. Das Zahnrad 236 ist seinerseits etwa mittig zwischen dem Vorläufer 222 und dem Nachläufer 224 drehbar an dem Verbindungsrahmen 230 so gelagert, dass die Drehachse 240 vertikal verläuft.

Das Zahnrad 236 kann mittels eines mit der Steuereinrichtung 232 des Antriebswagens 210 kommunizierenden Stellmotors 242 angetrieben werden, welcher dazu ein in die Außenverzahnung 238 des Zahnrads 236 eingreifendes Zahnrad 244 antreibt. Somit kann der Teleskoparm 234 um die Drehachse 240 je nach Drehrichtung des Ritzels 244 sowohl im Uhrzeigersinn als auch gegen den Uhrzeigersinn verdreht werden.

Der Stellmotor 242 und das Ritzel 244 sind der Übersichtlichkeit halber lediglich in Figur 4 gezeigt, wozu der Verbindungsrahmen 230 dort teilweise weggebrochen ist.

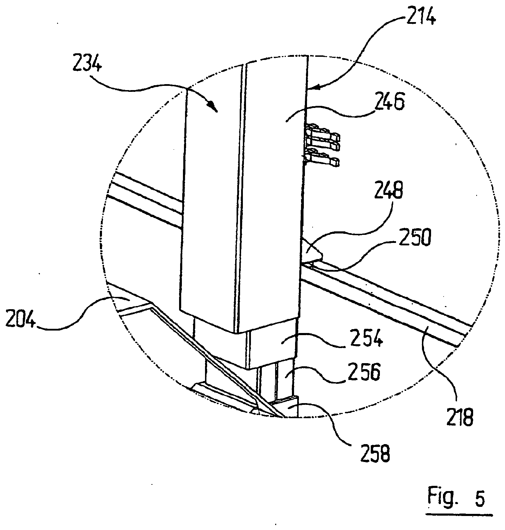

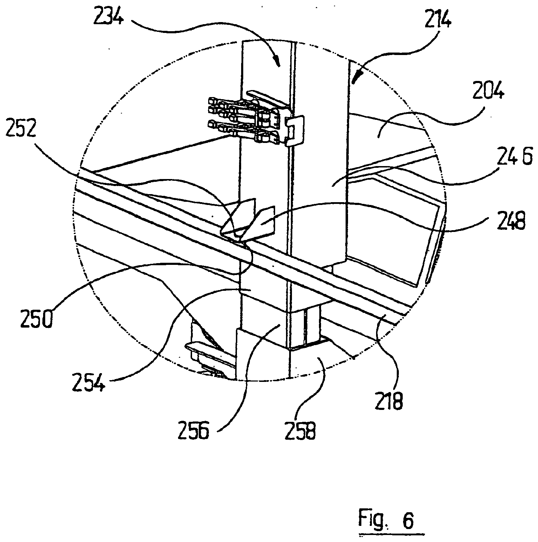

Der Teleskoparm 234 umfasst ein oberes Teleskopglied 246. Dieses trägt an seinem vom Zahnrad 236 abliegenden Ende an einem Querträger 248 eine Führungsrolle 250, welche frei um eine vertikale Drehachse 252 verdrehbar ist und in dem U-Profil der Führungsschiene 218 läuft, was insbesondere in den Figuren 5 und 6 zu erkennen ist. Auf diese Weise ist ein Verkippen des Teleskoparms 234 aus der Vertikalen in einer senkrecht auf die Bewegungsrichtung 220 stehenden Ebene verhindert.

Der Teleskoparm 234 umfasst neben dem oberen Teleskopglied 246 ein mittleres Teleskopglied 254 sowie ein unteres Teleskopglied 256. Die Teleskopglieder 246, 254 und 256 sind relativ zueinander verschiebbar, worauf weiter unten nochmals näher eingegangen wird.

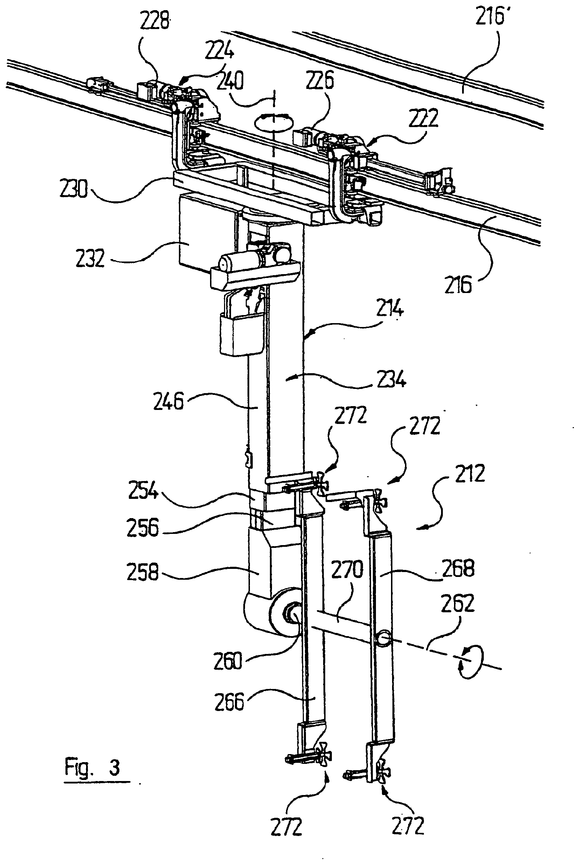

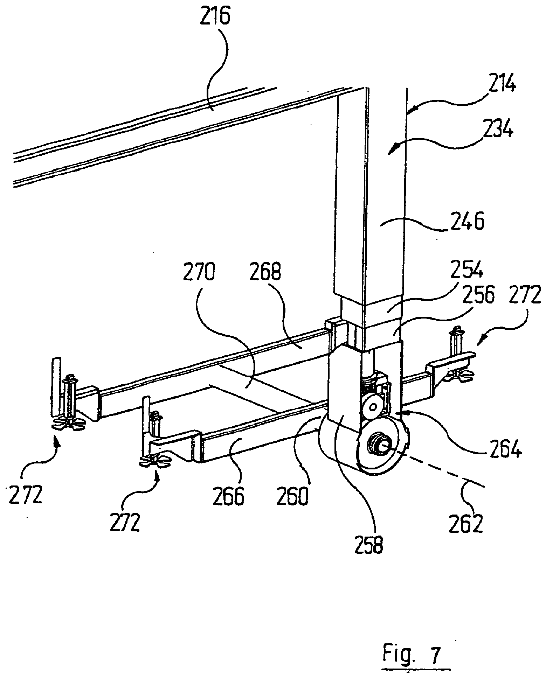

Das untere Teleskopglied 256 dient als in dem mittleren Teleskopglied 254 verfahrbarer Schlitten 256 und wird nachstehend als solcher bezeichnet. Am unteren freien Endbereich 258 des Schlittens 256 ist ein Drehzapfen 260 gelagert. Dieser definiert eine in den Figuren 2 und 3 gezeigte horizontale Drehachse 262. Der Drehzapfen 260 kann über einen von dem Schlitten 256 in seinem unteren Endbereich 258 mitgeführten Getriebemotor 264 (vgl. Figur 7, Abdeckung entfernt), welcher mit der Steuereinrichtung 232 des Transportwagen 208 kommuniziert, in beide Drehrichtungen um die Drehachse 262 verdreht werden.

Wie insbesondere in den Figuren 2, 3 und 7 gut zu erkennen ist, weist der Tragwagen 212 zwei als Hohlprofil ausgebildete und parallel zueinander verlaufende Längsholme 266 und 268 mit rechteckigem Querschnitt auf, welche mittig durch eine Quertraverse 270 mit kreisförmigen Querschnitt verbunden sind. Der Drehzapfen 260 des Schlittens 256 ist drehfest mit der Außenfläche des Längsholms 266 des Tragwagens 212 verbunden, wobei der Drehzapfen 260 und der Querholm 270 des Tragwagens 212 koaxial zueinander verlaufen. An den Stirnseiten der Längsholme 266 und 268 sind Befestigungsmittel 272 angebracht, mittels welchen eine zu lackierende Fahrzeugkarosserie 204 in an und für sich bekannter Weise an dem Tragwagen 212 lösbar befestigt werden kann.

Der Schlitten 256 trägt den Tragwagen 212 über den Drehzapfen 260 somit nur an einer Seite, so dass der Transportwagen 208 insgesamt als L-förmiger Bügel ausgebildet ist. Der Transportwagen 208 kann während seiner Bewegung entlang der Antriebsschiene 216 so ausgerichtet sein, dass der Tragwagen 212 mit den Befestigungsmitteln 272 seitlich gegenüber der Antriebschiene 216 versetzt angeordnet ist. Dadurch kann sichergestellt werden, dass keine Komponente des Fördersystems 206, z.B. unter anderem die Antriebsschiene 216 oder der Antriebswagen 210, in dem Raum senkrecht über dem Tragwagen 212 mit den Befestigungsmitteln 272 angeordnet ist. Die Gefahr einer Verunreinigung der Fahrzeugkarosserie 204 durch von Komponenten des Fördersystems 206 herabfallenden Schmutz, wie z.B. Staub, Öl oder dergleichen, ist somit verringert.

Wie oben erwähnt, können die Teleskopglieder 246, 254 und 256 des Teleskoparms 234 relativ zueinander bewegt werden. Dazu sind die Querschnitte der einzelnen Teleskopglieder 246, 254 und 256 derart komplementär zueinander ausgebildet, dass das mittlere Teleskopglied 254 in dem oberen Teleskopglied 246 und der Schlitten 256 in dem mittleren Teleskopglied 254 geführt verschoben werden kann.

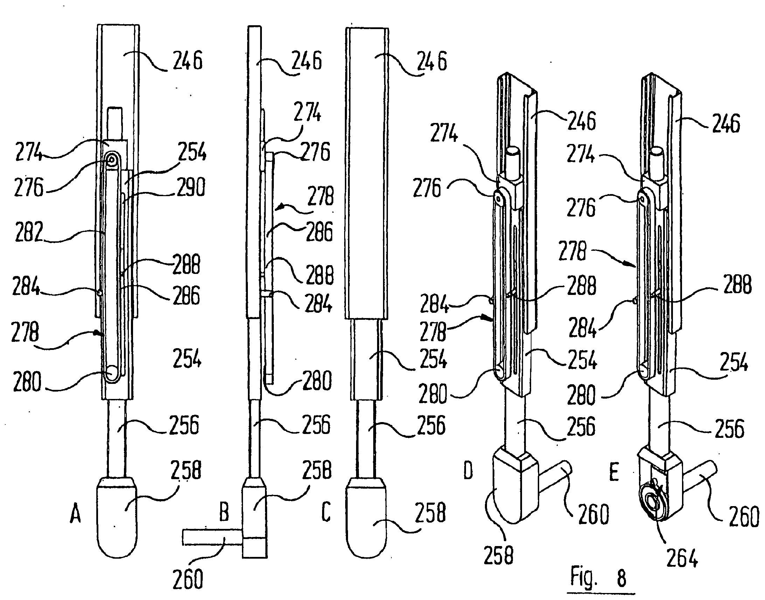

Bei einem in Figur 8 in teilweise weggebrochenen Ansichten gezeigten ersten Ausführungsbeispiel des Teleskoparms 234 trägt das mittlere Teleskopglied 254 stirnseitig an seinem oberen Ende, welches sich stets innerhalb des oberen Teleskopglieds 246 befindet, einen Stellmotor 274, welcher mit der Steuereinrichtung 232 des Transportwagens 208 kommuniziert und ein Antriebsritzel 276 in zwei Drehrichtungen antreiben kann. Eine Kette 278 läuft sowohl über das Antriebsritzel 276 des Stellmotors 274 als auch über ein Umlaufritzel 280, welches am unteren Ende des mittleren Teleskopglieds 254 gelagert ist, welches aus dem oberen Teleskopglied 246 nach unten herausragt. Die Kette 278 ist an ihrem in Figur 8A linken Trum 282 mit einem Verbindungsbolzen 284 verbunden, welcher seinerseits unbeweglich an dem oberen Teleskopglieds 246 angebracht ist. Das gegenüberliegende zweite Trum 286 der Kette 278 ist mit einem Verbindungsbolzen 288 gekoppelt, welcher seinerseits unbeweglich mit dem Schlitten 256 des Teleskoparms 234 verbunden ist. Der Verbindungsbolzen 288 des Schlittens 256 läuft in einem Schlitz 290, der in einer Seitenwand des mittleren Teleskopglieds 254 vorgesehen ist, wogegen der Verbindungsbolzen 278 des oberen Teleskopglieds 246 seitlich an dem mittleren Teleskopglied 254 vorbeigeführt ist.

Wird nun der Stellmotor 274 derart von der Steuereinrichtung 232 des Transportwagens 208 angesteuert, dass sich das Antriebsritzel 276 in Figur 8A im Uhrzeigersinn verdreht, so wird der mit dem Schlitten 256 gekoppelte Verbindungsbolzen 288 von der Kette 278 nach unten mitgenommen, so dass sich das Schlittens 256 aus dem mittleren Teleskopglied 254 herausschiebt. Gleichzeitig wird das mittlere Teleskopglied 254 aufgrund des unbeweglichen und am oberen Teleskopglied 246 befestigten Verbindungsbolzen 284 aus dem oberen Teleskopglied 246 heraus geschoben. Auf diese Weise wird der Teleskoparm 236 insgesamt ausgefahren. Der Teleskoparm 234 kann wieder eingefahren werden, indem das Antriebsritzel 276 durch den Stellmotor 274 derart verdreht wird, dass es sich in Figur 8A entgegen dem Uhrzeigersinn bewegt.

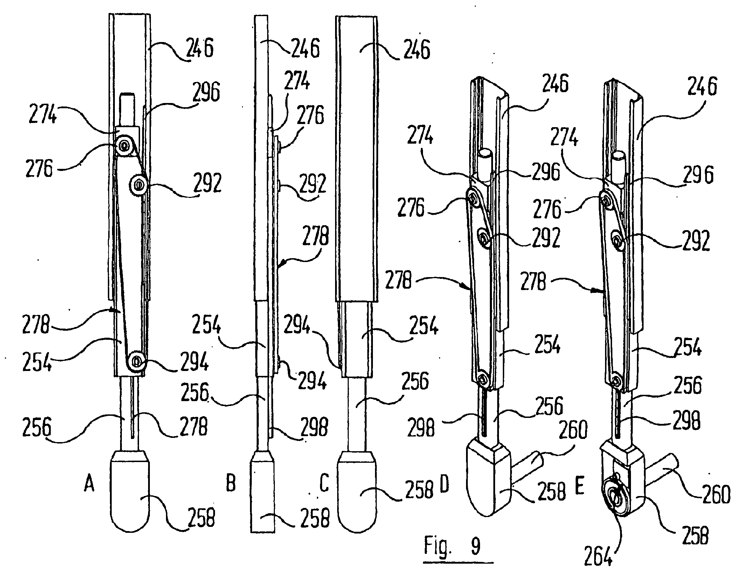

Eine alternative Ausbildung des Teleskoparms 234 ist in Figur 9 in teilweise weggebrochenen Ansichten gezeigt. Dort läuft die Kette 278 über das Antriebsritzel 276 des Stellmotors 274 sowie über ein erstes Koppelritzel 292 und ein zweites Koppelritzel 294 ab. Die Koppelritzel 292 und 294 tragen koaxial jeweils ein Stirnrad, welche in den Ansichten der Figur 9 nicht zu erkennen sind. Die Außenverzahnung des Stirnrads am Koppelritzel 292 greift in eine unbeweglich mit dem oberen Teleskopglied 246 des Teleskoparms 234 verbundene Zahnstange 296 ein und ist im oberen Bereich des mittleren Teleskopglieds 254 angeordnet. Das Koppelritzel 294 ist dagegen im unteren Bereich des mittleren Teleskopglieds 254 angeordnet; die Verzahnung des daran angebrachten Stirnrades greift in eine unbeweglich mit dem Schlitten 256 des Teleskoparms 234 verbundene Zahnstange 298 ein. Dazu erstreckt sich das nicht zu erkennende Stirnrad am Koppelritzel 294 durch eine Seitenwand des mittleren Teleskopglieds 254 hindurch.

Wird nun der Stellmotor 274 derart von der Steuereinrichtung 232 des Transportwagens 208 angesteuert, dass sich das Antriebsritzel 276 in Figur 9A entgegen dem Uhrzeigersinn verdreht, so werden auch die Koppelritzel 292 und 294 entgegen dem Uhrzeigersinn verdreht. Durch den Eingriff der daran befestigten Stirnräder in die Zahnstangen 296 bzw. 298 wird dabei das mittlere Teleskopglied 254 des Teleskoparms 234 aus dem oberen Teleskopglied 246 und gleichzeitig der Schlitten 256 aus dem mittleren Teleskopglied 254 heraus geschoben.

Wird das Kettenritzel 276 im Uhrzeigersinn verdreht, so wird der Schlitten 256 in das mittlere Teleskopglied 254 und gleichzeitig dieses in das obere Teleskopglied 246 eingefahren.

Bei hier nicht gezeigten Abwandlungen kann die Hub-/Senkbewegung der Teleskopglieder 246 und 254 und des Schlittens 256 auch durch eine Schubkette oder ähnliche Vorrichtungen bewirkt werden.

Die Funktionsweise der oben beschriebenen kataphoretischen Tauchlackieranlage 200 ist folgende:
Die zu lackierenden Fahrzeugkarosserien 204 werden in Figur 1 in im Wesentlichen horizontaler Ausrichtung (vgl. Pfeil 220) von einer Vorbehandlungsstation zugeführt, in welcher die Fahrzeugkarosserien 204 in bekannter Weise durch Reinigen, Entfetten usw. auf den Lackiervorgang vorbereitet werden.

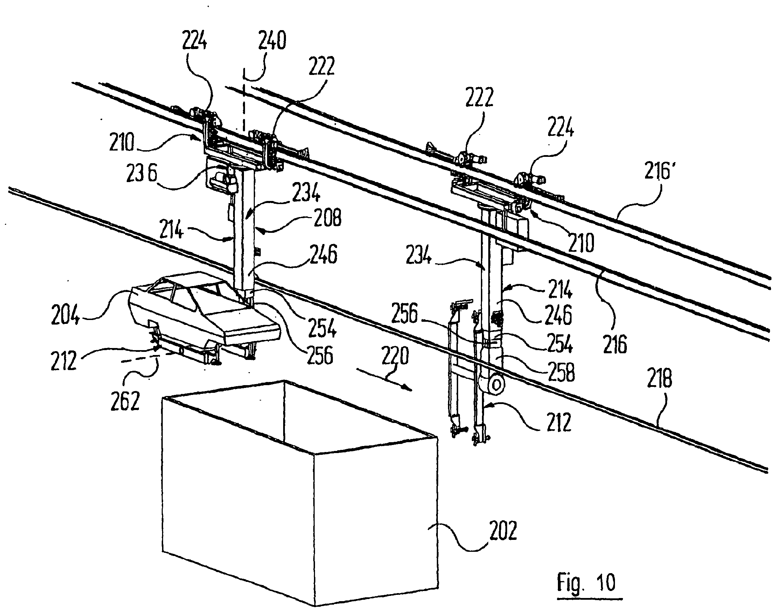

Der Schlitten 256 ist dabei in seine oberste Position verfahren, in welcher die Teleskopglieder 256, 254 und 256 des Teleskoparms 234 ineinander gefahren sind, so dass letzterer seine geringstmögliche Länge aufweist. Die entsprechende Position ist perspektivisch in Figur 10 zu erkennen. Der Antriebswagen 210 des entsprechenden Transportwagens 208 wird mit Hilfe der Elektromotoren 226 und 228 entlang der Antriebsschiene 216 auf das Tauchbecken 202 zugeführt, wobei der zugehörige Tragwagen 212 über die Teleskopeinrichtung 214 mitgeführt wird. Dabei läuft die Führungsrolle 250 am oberen Teleskopglied 246 des Teleskoparms 234 in dem U-Profil der Führungsschiene 218, was jedoch nicht der Gewichtsaufnahme dient. Das Gewicht des Transportwagens 208 und der daran befestigten Fahrzeugkarosserie 204 wird über den Antriebswagen 210 vollständig von der Antriebsschiene 216 getragen.

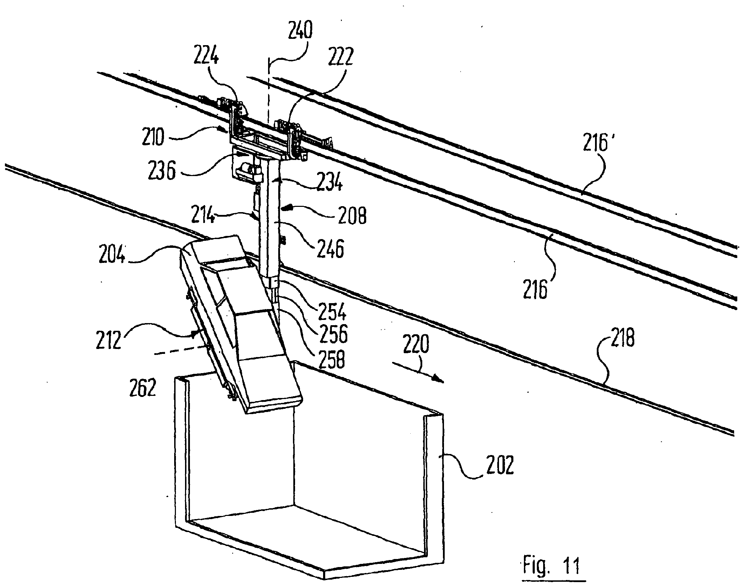

Wenn sich der Transportwagen 208 der auf der Eintrittsseite befindlichen Stirnwand des Tauchbeckens 202 nähert, wird der Schlitten 256, welcher die Fahrzeugkarosserie 204 über den Transportwagen 208 trägt, progressiv abgesenkt, indem mit Hilfe des Stellmotors 274 der Teleskoparm 234 in oben beschriebener Weise ausgefahren wird. Sobald die Front der Fahrzeugkarosserie 204 über die Stirnwand des Tauchbeckens 202 hinaus ins Innere des Tauchbeckens 202 ragt, wird gleichzeitig mit Hilfe des Getriebemotors 264 der Drehzapfen 260 und damit der Tragwagen 212 mit den Befestigungsmitteln 272 und daran befestigter Fahrzeugkarosserie 204 um die Drehachse 262 verdreht. In diesem Bereich ist also die Gesamtbewegung der Fahrzeugkarosserie 204 als Überlagerung dreier Bewegungen zu verstehen, nämlich einer horizontalen Linearbewegung (Pfeil 220) entlang der Antriebsschiene 216, einer vertikalen Linearbewegung entlang der Drehachse 240 und damit auch entlang der Längsachse des Teleskoparms 234 und einer Drehbewegung um die Drehachse 262 des Drehzapfens 260, die in der Sicht der Figur 1 im Uhrzeigersinn erfolgt. Dabei "wickelt" sich die Fahrzeugkarosserie 204 über die eingangsseitige Stirnwand des Tauchbeckens 202. Die entsprechende Position ist perspektivisch in Figur 11 dargestellt.

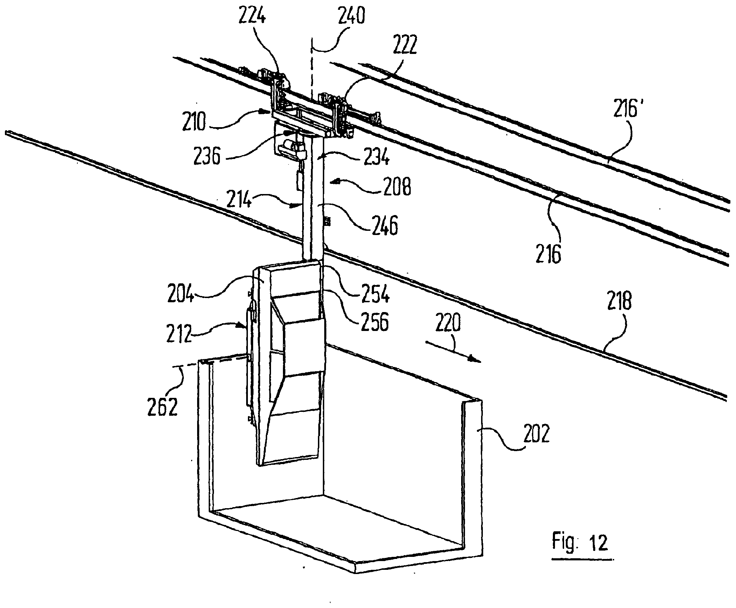

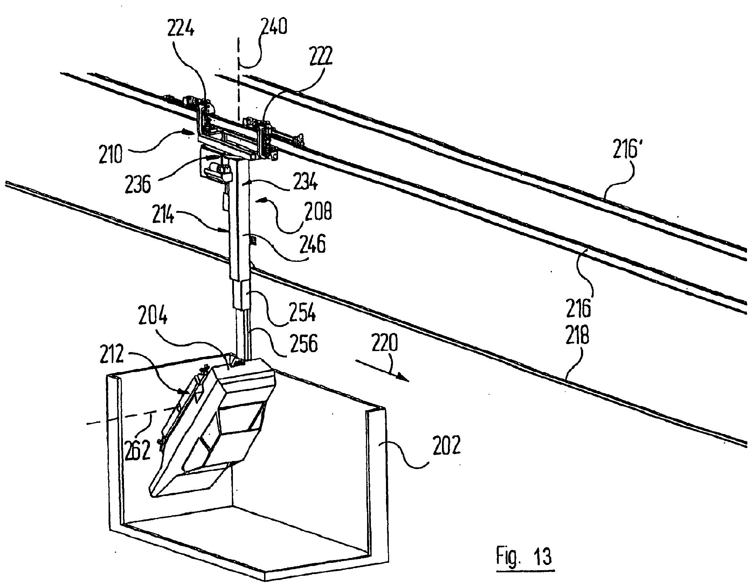

Unter fortgesetztem Absenken des Schlittens 256 und fortgesetzter Drehung der Fahrzeugkarosserie 204 um die Drehachse 262 des Drehzapfens 260 wird schließlich eine Position erreicht, in welcher die Fahrzeugkarosserie 204 im Wesentlichen senkrecht steht, wie dies in Figur 12 dargestellt ist. Dabei befindet sich die Fahrzeugkarosserie 204 noch verhältnismäßig nahe an der eingangsseitigen Stirnwand des Tauchbeckens 202. In dem Ausmaß, in dem sich der Transportwagen 208 weiter bewegt und damit der Abstand zwischen der Mitte der Fahrzeugkarosserie 204 und der eingangsseitigen Stirnwand des Tauchbeckens 202 wächst, wird der Drehzapfen 260 und damit die Fahrzeugkarosserie 204 weiter im Uhrzeigersinn verdreht, so dass sich die Fahrzeugkarosserie 204 auf den Rücken zu legen beginnt, was in Figur 13 dargestellt ist. Die Bewegungsgeschwindigkeit in horizontaler Richtung und die Drehgeschwindigkeit können dabei so aufeinander abgestimmt werden, dass die Front der Fahrzeugkarosserie 204 bei dieser Eintauchbewegung etwa denselben Abstand von der eingansseitigen Stirnseite des Tauchbeckens 202 behält.

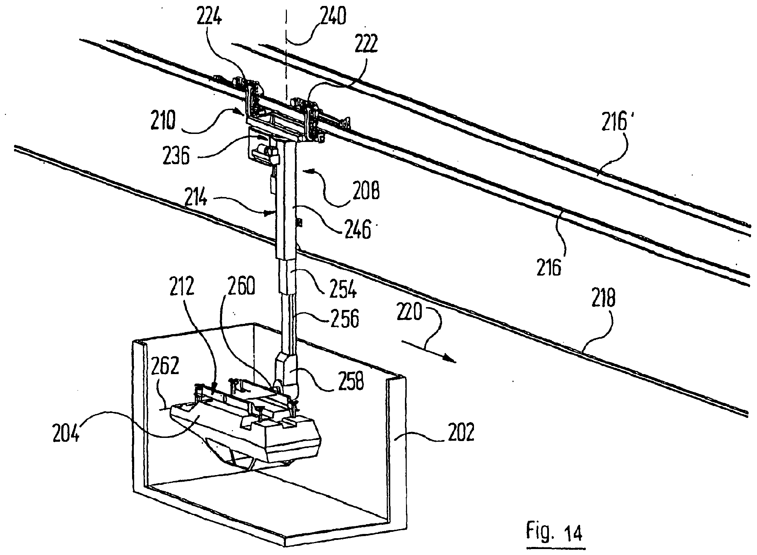

Spätestens in dem Moment, in dem die Fahrzeugkarosserie 204 vollständig "auf dem Rücken" und damit wieder horizontal liegt und der in Figur 14 dargestellt ist, ist die Fahrzeugkarosserie 204 vollständig in den flüssigen Lack eingetaucht. Die Fahrzeugkarosserie 204 wird zunächst in dieser Position mit Hilfe des Transportwagens 208 weiter durch das Tauchbecken 202 gefördert, bis sie näher an die ausgangsseitige Stirnwand des Tauchbeckens 202 herangerückt ist.

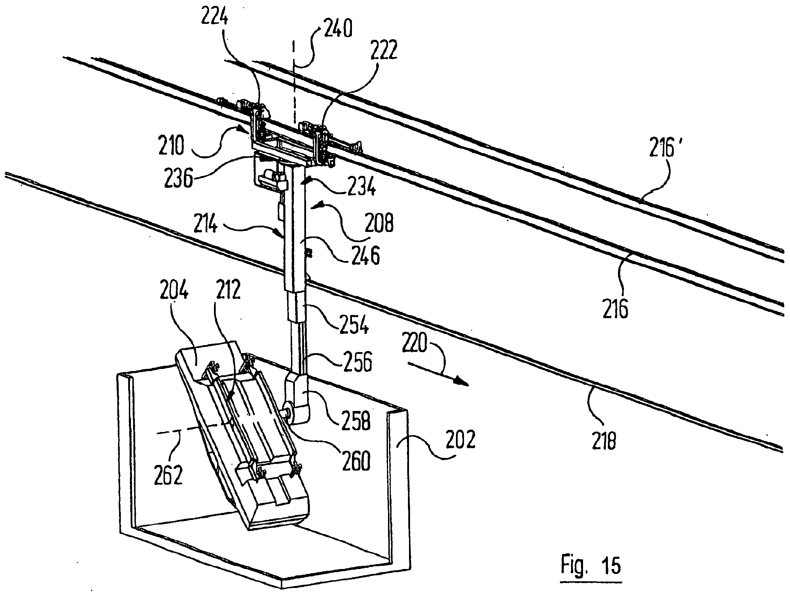

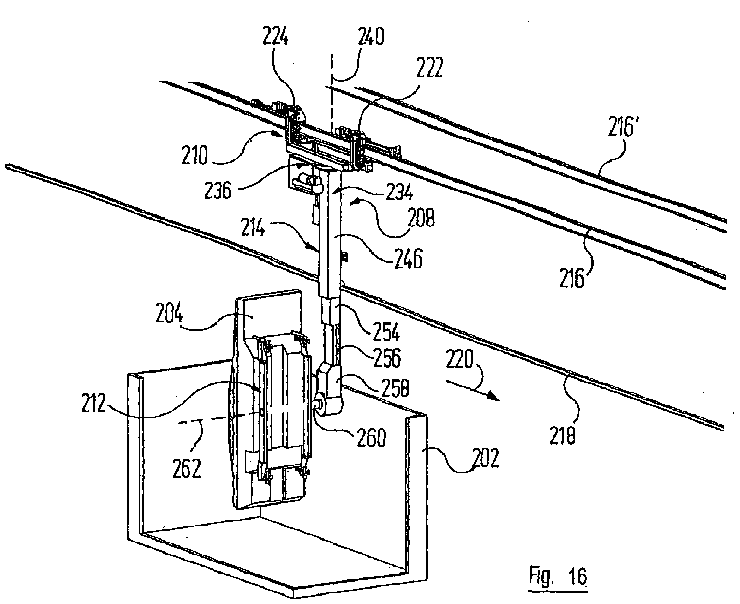

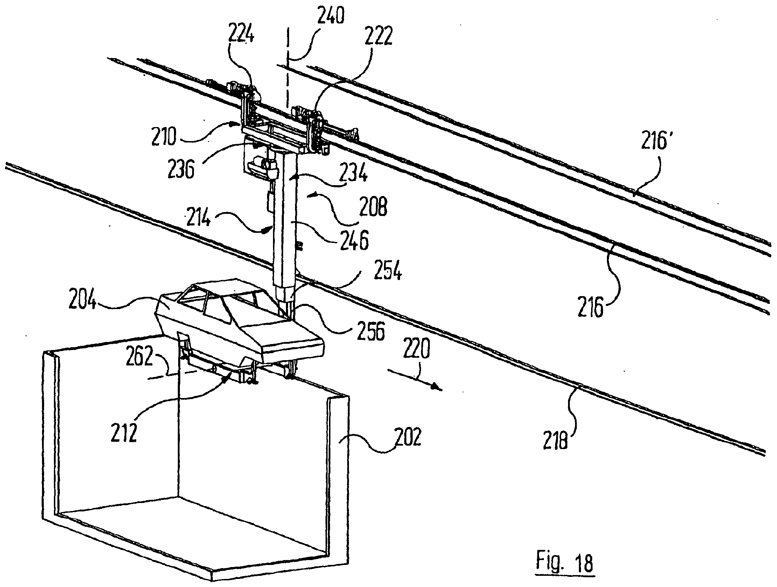

Sodann beginnt der Austauchvorgang der Fahrzeugkarosserie 204. Dieser stellt sich wiederum als Überlagerung von drei Bewegungen dar, nämlich der horizontalen Linearbewegung in Förderrichtung 220, der Vertikalbewegung entlang der Drehachse 240 und damit auch entlang der Längsachse des Teleskoparms 234 und der Drehbewegung um die Drehachse 262 des Drehzapfens 260. Zunächst wird die Fahrzeugkarosserie 204 durch Weiterverdrehen des Drehzapfens 260 im Uhrzeigersinn vertikal gestellt, was in den Figuren 15 und 16 dargestellt ist. Sodann "wickelt" sich die Fahrzeugkarosserie 204 unter Einfahren des Teleskoparms 234 und damit unter einer Aufwärtsbewegung des Schlittens 256 und Fortsetzung der Drehbewegung über die ausgangsseitige Stirnwand des Tauchbeckens 202 weg (vgl. Figur 7), bis dann erneut in Förderrichtung 220 hinter dem Tauchbecken 202 eine horizontale Position der frisch lackierten Fahrzeugkarosserie 204 erreicht ist, welche in Figur 18 gezeigt ist.

Die beschriebene Tauchlackieranlage 200 kann auch zum Tauchlackieren kleinerer Gegenstände (Kleingüter) verwendet werden. Dazu können beispielsweise nicht eigens gezeigte Haltekörbe an den Tragwagen 212 befestigt werden, welche nicht dargestellte kleinteilige, zu lackierende Gegenstände beispielsweise in loser Schüttung enthalten. Es versteht sich, dass solche Haltekörbe nicht in einer Position durch das Tauchbecken 202 geführt werden, in welcher ihre Beschickungsöffnung nach unten weist und zu beschichtende Gegenstände herausfallen könnten.

Wie oben erläutert, kann der Teleskoparm 234 über den Stellmotor 242 um die vertikale Drehachse 240 verdreht werden. Bei der in den Figuren 1 und 10 bis 18 gezeigten Kinematik nimmt der Teleskoparm 234 im Hinblick auf seine vertikale Drehachse 240 eine Stellung ein, bei welcher der Drehzapfen 260 am Schlitten 256 derart ausgerichtet ist, dass seine horizontale Drehachse 262 senkrecht auf die Bewegungsrichtung 220 steht. Der Teleskoparm 234 wird durch eine entsprechende Arretierung des Stellmotors 242 in dieser Stellung gehalten.

Die Verdrehbarkeit des Teleskoparms 234 um die vertikale Drehachse 240 kommt bei der in den Figuren 1 und 10 bis 18 gezeigten Kinematik erst zu tragen, wenn die Fahrzeugkarosserien 204 das Tauchbecken 202 verlassen haben und von den Transportwagen 208 zur weiteren Bearbeitung abgenommen sind. Die Transportwagen 208 müssen dann wieder zum Eingang der Tauchlackieranlage 200 zurückgeführt werden, damit sie dort erneut mit noch zu lackierenden Fahrzeugkarosserien 204 beladen werden können. Hierzu wird der Tragwagen 212 gegenüber dem Verbindungsrahmen 230 des Antriebswagens 210 um die vertikale Drehachse 240 verdreht, bis der Drehzapfen 260 am Schlitten 256 parallel zur Bewegungsrichtung 220 ausgerichtet ist, indem der Stellmotor 242 betätigt und darüber das Zahnrad 236 am oberen Teleskopglied 246 des Teleskoparms 234 verdreht wird. Zudem wird der Tragwagen 212 durch eine entsprechende Drehung des Drehzapfens 260 über den Getriebemotor 264 in eine Stellung gebracht, in welcher seine Längsholme 266 und 268 vertikal stehen. Diese Stellung ist in den Figuren 2 und 3 gezeigt. In Figur 10 ist ein Transportwagen 208 zu erkennen, der in dieser "Rückführstellung" auf einer Antriebsschiene 216', welche parallel zur Antriebsschiene 216 läuft und über ein nicht zu erkennendes Schienenkurvenstück mit dieser verbunden ist, zum Eingang der Tauchlackieranlage 200 zurückgeführt wird.

Die Übergabe des Transportwagens 208 von der Antriebsschiene 216 auf die Antriebsschiene 216' kann auch mittels einer Querverschiebung erfolgen, ohne dass dazu ein die Antriebsschienen 216, 216' verbindendes Schienenkurvenstück nötig wäre.

Durch die Drehung des Tragwagens 212 und dessen Vertikalstellung gegenüber dem Antriebswagen 210 wird der Platzbedarf für den Transportwagen 208 auf dem Rückweg vom Ausgang der Tauchlackieranlage 200 zu deren Eingang verringert.

Der oben anhand der Figuren 10 bis 18 geschilderte Bewegungsablauf der Fahrzeugkarosserie 204 beim Durchgang durch das Tauchbecken 202 ist nur beispielhaft. Die konstruktive Ausgestaltung des Transportwagens 208 lässt eine Vielzahl anderer Kinematiken zu, die jeweils an die Art der Fahrzeugkarosserie 3 angepasst werden können. Beispielsweise kann die Fahrzeugkarosserie 204 auf "Dach oben" durch das Tauchbecken 202 geführt werden.

Alternativ ist es möglich, dass die Drehachse 262 des Tragwagens 212 knapp über dem Flüssigkeitsspiegel der im Tauchbad 202 befindlichen Badflüssigkeit geführt wird. In diesem Fall wird die Fahrzeugkarosserie "Dach unten" durch das Tauchbecken 202 geführt. Dabei kann erreicht werden, dass weder der Tragwagen 212 noch der Schlitten 256 mit Badflüssigkeit in Kontakt kommen, wodurch die Gefahr verringert ist, Badflüssigkeit von einem Tauchbad ins nächste Tauchbad zu verschleppen und Schmiermittel in die Tauchbäder einzutragen.

Es ist beispielsweise auch möglich, den durch die vertikale Drehachse 240 vorgegebenen weiteren Freiheitsgrad zu nutzen, wenn die Fahrzeugkarosserie 204 durch das Tauchbecken 202 geführt wird. So kann eine Fahrzeugkarosserie 204 bei entsprechenden Abmessungen des Tauchbeckens 202 auch quer durch dieses geführt werden und nicht in Längsrichtung, wie es in den Figuren 10 bis 18 veranschaulicht ist. Auch kann der Teleskoparm 234 so weit um die vertikale Drehachse 240 gedreht werden, dass der Drehzapfen 260 bzw. dessen Drehachse 262 mit der Bewegungsrichtung 220 einen Winkel zwischen 0 und 90° einschließt. Auch kann der Teleskoparm 234 um die vertikale Drehachse 240 hin- und hergedreht werden, während die Fahrzeugkarosserie 204 durch das Tauchbecken 202 geführt wird, wodurch eine "Schlingerbewegung" der Fahrzeugkarosserie 204 im Tauchbecken 202 erzielt werden kann.

Für die Fahrzeugkarosserie 204 kann somit ein Bewegungsablauf erzielt werden, der als Überlagerung von vier Bewegungen verstanden werden kann, nämlich einer horizontalen Linearbewegung (entsprechend der Bewegungsrichtung 220), einer vertikalen Linearbewegung entlang der Drehachse 240 und damit entlang der Längsachse des Teleskoparms 234, einer Drehbewegung um die horizontale Drehachse 262 des Drehzapfens 260 und einer Drehbewegung um die vertikale Drehachse 240 des Teleskoparms 234.

Das als Hängebahnsystem ausgebildete Fördersystem 206 erfordert keine weiteren Aufbauten rechts und/oder links des Tauchbeckens 202, wie sie bei anders konzipierten Anlagen notwendig sind. Dadurch kann die Tauchlackieranlage 200 insgesamt verhältnismäßig schmal gehalten werden.

Durch die seitliche Lagerung des Tragwagens 212 gibt es darüber hinaus keine Abschattungen der Fahrzeugkarosserie 204 durch weitere Bauteile des Transportwagens 208, die im Tauchbad entsprechend aufwändig durch eine geeignete Kinematik und/oder eine längere Verweilzeit im Tauchbad kompensiert werden müssten.

Beim Führen der Fahrzeugkarosserie 204 durch das Tauchbad wird der untere Endbereich 258 des Schlittens 256, welcher den horizontalen Drehzapfen 262 trägt, in die Badflüssigkeit abgesenkt. Dadurch kann die horizontale Drehachse 260 nahe dem Schwerpunkt der von dem Tragwagen 212 aufgenommenen Fahrzeugkarosserie 204 angeordnet sein. Dies führt zu einer günstigeren Kraftverteilung beim Bewegungsablauf für die Fahrzeugkarosserie als es bei bekannten Systemen der Fall ist, bei denen die Drehachse verhältnismäßig weit vom Schwerpunkt der Fahrzeugkarosserie abliegt.

## Patentansprüche

1. Tauchbehandlungsanlage zum Behandeln von Fahrzeugkarosserien, mit
a) mindestens einem Tauchbecken (202), welches mit einer Behandlungsflüssigkeit füllbar ist, in welche zu behandelnde Fahrzeugkarosserien (204) vollstandig eingetaucht werden können;
b) einer Förderanlage (206), welche die zu behandelnden Fahrzeugkarosserien (204) an das Tauchbecken (202) heran, vollständig in den Innenraum des Tauchbeckens (202) hinein, aus dem Tauchbecken (202) heraus und vcn diesem wegbewegen kann, mit
ba) mindestens einem Transportwagen (208), welcher eine Befestigungseinrichtung (212, 272) umfasst, an welcher wenigstens eine Fahrzeugkarosserie (204) befestigbar ist;
bb) mindestens einer den Transportwagen (208) tragenden Schiene (216);
bc) mindestens einem Antriebsmittel (222, 224) zum Verfahren des Transportwagens (208) entlang der Schiene (216);
**dadurch gekennzeichnet, dass**
c) die Förderanlage (206) ein Hängebahnsystem (206) ist;
d) die Befestigungseinrichtung (212, 272) um eine vertikale Drehachse (240) verdrehbar gelagert ist;
e) eine Drehung der Befestigungseinrichtung (212, 272) um die vertikale Drehachse (240) erzielbar ist, während die wenigstens eine Fahrzeugkarosserie (204) in das mindestens eine Tauchbecken (202) eingetaucht ist.

2. Tauchbehandlungsanlage nach Anspruch 1, welches derart eingerichtet ist, dass für die mindestens eine Fahrzeugkarosserie (204) ein Bewegungsablauf erzielbar ist, der eine Überlagerung einer horizontalen Linearbewegung und einer Drehung um die vertikale Drehachse (240) ist.

3. Tauchbehandlungsanlage nach Anspruch loder 2, **dadurch gekennzeichnet, dass** der Transportwagen (208) einen vertikal verfahrbaren Schlitten (256) umfasst, von welchem die Befestigungseinrichtung (212, 272) mitgeführt wird.

4. Tauchbehandlungsanlage nach Anspruch 3, **dadurch gekennzeichnet, dass** der Transportwagen (208) eine in vertikale Richtung ein- oder ausfahrbare Teleskopeinrichtung (214) umfasst, welche den Schlitten (256) führt.

5. Tauchbehandlungsanlage nach einem der Ansprüche 1 bis 4, **dadurch gekennzeichnet, dass** der Transportwagen (208) als Antriebsmittel (210) einen an der Schiene (216) motorisch verfahrbaren Antriebswagen (210) umfasst.

6. Tauchbehandlungsanlage nach Anspruch 5 unter Rückbezug auf Anspruch 4, **dadurch gekennzeichnet, dass** die Teleskopeinrichtung (214) um die vertikale Drehachse (240) verdrehbar an dem Antriebswagen (210) des Transportwagens (208) gelagert ist.

7. Tauchbehandlungsanlage nach einem der Ansprüche 1 bis 6, **dadurch gekennzeichnet, dass** die Befestigungseinrichtung (212, 272) außerdem um eine horizontale Drehachse (262) verdrehbar gelagert ist.

## Claims

1. A dip treatment plant for the treatment of vehicle bodies, comprising
a) at least one dip bath (202) which can be filled with a treatment liquid into which vehicle bodies (204) to be treated can be dipped completely;
b) a conveyor system (206) which can move the vehicle bodies (204) to be treated up to the dip bath (202), completely into the interior of the dip bath (202), out of the dip bath (202) and away from the latter, having
ba) at least one transport carriage (208) comprising a fastening device (212, 272) to which at least one vehicle body (204) can be fastened;
bb) at least one rail (216) supporting the transport carriage (208);
bc) at least one drive means (222, 224) for moving the transport carriage (208) along the rail (216);
**characterized in that**
c) the conveyor system (206) is an overhead conveyor system (206);
d) the fastening device (212, 272) is mounted such that it is rotatable about a vertical axis of rotation (240);
e) a rotation of the fastening device (212, 272) about the vertical axis of rotation (240) is achievable while the at least one vehicle body (204) is dipped in the at least one dip bath (202).

2. Dip treatment plant according to claim 1, which is configured such that a movement sequence is achievable for the at least one vehicle body (204), which is a superposition of a horizontal linear movement and a rotation about the vertical axis of rotation (240).

3. Dip treatment plant according to claim 1 or 2, **characterized in that** the transport carriage (208) comprises a vertically movable skid (256) by which the fastening device (212, 272) is entrained.

4. Dip treatment plant according to claim 3, **characterized in that** the transport carriage (208) comprises a telescopic device (214) which can be retracted or extended in the vertical direction and which guides the skid (256).

5. Dip treatment plant according to one of claims 1 to 4, **characterized in that** the transport carriage (208) comprises as drive means (210) a drive carriage (210) which can be moved by motor on the rail (216).

6. Dip treatment plant according to claim 5 with reference to claim 4, **characterized in that** the telescopic device (214) is mounted such that it is rotatable about the vertical axis of rotation (240) on the drive carriage (210) of the transport carriage.

7. Dip treatment plant according to any one of claims 1 to 6, **characterized in that** the fastening device (212, 272) is also mounted such that it is rotatable about a horizontal axis of rotation (262).

## Revendications

1. Installation de traitement par immersion pour le traitement des carrosseries de véhicules, avec
a) une cuve d'immersion (202) qui peut être remplie d'un liquide de traitement et dans laquelle des carrosseries de véhicules (204) peuvent être immergés entièrement;
b) un système de convoyeur (206) qui peut déplacer les carrosseries de véhicules (204) à traiter vers la cuve d'immersion (202), complètement à l'intérieur de la cuve d'immersion (202), hors de la cuve d'immersion (202) et loin de celle-ci, avec
ba) au moins un chariot de transport (208), qui comprend un dispositif de fixation (212, 272) auquel peut être fixé au moins une carrosserie de véhicule (204);
bb) au moins un rail (216) portant le chariot de transport (208);
bc) au moins un moyen d'entraînement (222, 224) pour déplacer le chariot de transport (208) le long du rail (216),
**caractérisé en ce que**
c) le système de convoyeur (206) est un système de convoyeur aérien (206);
d) le dispositif de fixation (212, 272) est monté à rotation autour d'un axe de rotation vertical (240);
e) une rotation du dispositif de fixation (212, 272) autour de l'axe de rotation vertical (240) est réalisable pendant que la au moins une carrosserie de véhicule (204) est immergée dans la au moins une cuve d'immersion.

2. Système de convoyeur aérien selon la revendication 1, qui est conçu de telle sorte qu'on peut obtenir pour la au moins une carrosserie de véhicule (204) un déroulement de mouvements qui est une superposition d'un mouvement linéaire horizontal et d'une rotation autour de l'axe de rotation vertical (240).

3. Système de convoyeur aérien selon la revendication 1 ou 2, **caractérisé en ce que** le chariot de transport (208) comprend un coulisseau (256) verticalement mobile, qui entraîne avec lui le dispositif de fixation (212, 272).

4. Système de convoyeur aérien selon la revendication 3, **caractérisé en ce que** le chariot de transport (208) comprend un dispositif télescopique (214), qui peut être rentré ou déployé en direction verticale et qui guide le coulisseau (256).

5. Système de convoyeur aérien selon l'une des revendications 1 à 4, **caractérisé en ce que** le chariot de transport (208) comprend comme moyen d'entraînement (210) un chariot d'entraînement (210) qui peut être déplacé par moteur sur le rail (216).

6. Système de convoyeur aérien selon la revendication 5 en rattachement à la revendication 4, **caractérisé en ce que** le dispositif télescopique (214) est monté sur le chariot d'entraînement (210) du chariot de transport (208) à rotation autour de l'axe de rotation vertical (240).

7. Système de convoyeur aérien selon l'une des revendications 1 à 6, **caractérisé en ce que** le dispositif de fixation (212, 272) est en outre monté à rotation autour d'un axe de rotation horizontal (262).
